# EUROPÄISCHE PATENTSCHRIFT

(11) **EP 3 433 141 B1**
(45) Veröffentlichungstag und Bekanntmachung des Hinweises auf die Patenterteilung: **16.06.2021**
(21) Anmeldenummer: 16788476.6
(22) Anmeldetag: 21.10.2016
(51) Int. Cl.: B60R 25/24, G07C 9/00

(54) **AUTORISIERUNG DER NUTZUNG EINES KRAFTFAHRZEUGS**
AUTHORISING THE USE OF A MOTOR VEHICLE
AUTORISATION D'UTILISER UN VÉHICULE À MOTEUR

(30) Priorität: 22.03.2016 DE 102016204750
(43) Veröffentlichungstag der Anmeldung: 30.01.2019
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/075339
(87) Internationale Veröffentlichungsnummer: WO 2017/162318

(56) Entgegenhaltungen:
- EP-A1- 1 403 653
- EP-A2- 0 867 971
- EP-A2- 1 184 236
- EP-A2- 2 498 226
- DE-A1-102011 079 421
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind. Bei dem Kraftfahrzeug handelt es sich insbesondere um ein zwei- oder vierrädriges Kraftfahrzeug.

Aus der DE 10 2005 013 910 A1 ist ein gattungsgemäßes Verfahren zur Autorisierung der Nutzung eines Kraftfahrzeugs bekannt.

Bei solchen bekannten Verfahren ist es wünschenswert, diese gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegen- stand der abhängigen Verfahrensansprüche.

Das erfindungsgemäße Verfahren geht aus von einem Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung des winkelauflösenden Magnetfeldsensors.

In einem fünften Schritt ermittelt ein erster Rechner, vorzugsweise ein Rechner im Identifikationsgeber, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals und

in einem sechsten Schritt sendet der Identifikationsgeber nur dann ein Autorisierungssignal zur Autorisierung der Nutzung des Kraftfahrzeugs an das Kraftfahrzeug, wenn der ermittelte Winkel einen vorbestimmten Schwellenwert überschreitet.

Erfindungsgemäß ist bzw. wird der Identifikationsgeber mit einem Bewegungssensor versehen. Der Bewegungssensor ermittelt bevorzugt, ob er bzw. ob der Identifikationsgeber bewegt wird und der Identifikationsgeber sendet nur dann das erste und/oder ein zweites Autorisierungssignal zur Autorisierung der Nutzung des Kraftfahrzeugs an das Kraftfahrzeug, wenn der Bewegungssensor eine Bewegung des Identifikationsgebers ermittelt.

Zusammenfassend kann durch das erfindungsgemäße Verfahren mithilfe von mindestens zwei räumlich separierten bzw. beabstandeten Sendern die Position des Empfängers bzw. des Identifikationsgebers winkelaufgelöst bestimmt werden. Werden die Signale der beabstandeten Sender in manipulativer Absicht durch einen Repeater weiter- geleitet, wird die Laufzeit verlängert und die Winkelinformation geht verloren. Das erfindungsgemäße winkelauflösende Verfahren erkennt eine solche Manipulation der Funkstrecke indem die Parallelität der Signale von dem Identifikationsgeber erkannt wird und dieser die Aussendung eines Autorisierungssignals verhindert.

Entsprechend einer bevorzugten Weiterbildung des erfindungsgemäßen Verfahrens ist vorgesehen, dass der Bewegungssensor wiederholt ermittelt, ob er bewegt wird. Vorzugsweise versieht der Bewegungssensor jeweils bei einer erkannten bzw. ermittelten Bewegung das Auftreten der Bewegung und/oder die Art der Bewegung mit einem Zeitstempel.

Durch die vorstehenden erfindungsgemäßen optionalen Maßnahmen werden Manipulationen zusätzlich erschwert bzw. vermieden.

Bei einer bevorzugten Ausführungsform des erfindungsgemäßen Verfahrens ist vorgesehen, dass jeweils das mit einem Zeitstempel versehene Auftreten der Bewegung und/oder die mit einem Zeitstempel versehene jeweilige Art der Bewegung in einem Datenspeicher im Identifikationsgeber und/oder in einem Datenspeicher in dem Kraftfahrzeug gespeichert und für einen späteren Bewegungs-Muster-Vergleich mit einem Referenz-Bewegungsmuster bereitgehalten wird.

Alternativ oder ergänzend ist bei einer Ausführungsform des erfindungsgemäßen Verfahrens vorgesehen, dass der Bewegungs-Muster-Vergleich von einem Rechner im Identifikationsgeber und/oder von einem Rechner im Kraftfahrzeug durchgeführt wird und der Identifikationsgeber und/oder das Kraftfahrzeug nur dann ein Autorisierungssignal zur Autorisierung der Nutzung des Kraftfahrzeugs bereitstellt, wenn der Rechner im Identifikationsgeber und/oder der Rechner im Kraftfahrzeug einen vorbestimmten Grad an Übereinstimmung des Bewegungsmusters des Identifikationsgebers mit dem Referenz-Bewegungsmuster ermittelt.

Bei einer besonders bevorzugten Ausgestaltung des erfindungsgemäßen Verfahrens ist vorgesehen, dass der Identifikationsgeber nur dann Daten, wie ein Autorisierungssignal, aussendet, wenn er aktuell bewegt wird.

Weiter ist bei einer besonders bevorzugten Ausführungsform des erfindungsgemäßen Verfahrens vorgesehen, dass das Referenz-Bewegungs-Muster das Bewegungsmuster einer typischen Annäherung an das Fahrzeug ist.

Bei einer Ausgestaltung des erfindungsgemäßen Verfahrens wird das Referenz-Bewegungsmuster für jeden Berechtigten und/oder für jeden Identifikationsgeber erhoben und für einen späteren Bewegungs-Muster-Vergleich im Identifikationsgeber und/oder im zugeordneten Kraftfahrzeug gespeichert.

Entsprechend einer bevorzugten Ausführungsform des erfindungsgemäßen Verfahrens ist vorgesehen, dass der Bewegungssensor durch einen Beschleunigungssensor gebildet wird.

Die vorstehenden erfindungsgemäßen optionalen Maßnahmen sind geeignet Manipulationen zusätzlich zu erschweren bzw. zu vermeiden.

Alternativ oder ergänzend kann bei einer Ausgestaltung des erfindungsgemäßen Verfahrens vorgesehen sein, dass der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird. Hierdurch wird die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar.

Bei einer Weiterbildung des erfindungsgemäßen Verfahrens ist vorgesehen, dass das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

Auch diese optionalen Maßnahmen sind in vorteilhafter Weise dazu geeignet, das Risiko von Manipulationen weiter zu verringern bzw. diese deutlich zu erschweren.

Entsprechend einer Ausführungsform des erfindungsgemäßen Verfahrens ist vorgesehen, dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

Bei einer Ausgestaltung des erfindungsgemäßen Verfahrens ist vorgesehen, dass die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Entsprechend einer Weiterbildung des erfindungsgemäßen Verfahrens ist vorgesehen, dass die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

Bei einer bevorzugten Ausführungsform des erfindungsgemäßen Verfahrens ist vorgesehen, dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Bei einer ebenfalls bevorzugten Weiterbildung des erfindungsgemäßen Verfahrens ist vorgesehen, dass mithilfe des Skalarprodukts rechnerisch der Winkel zwischen den beiden Vektoren bestimmt wird.

Die vorstehenden optionalen Maßnahmen sind in vorteilhafter Weise dazu geeignet, das erfindungsgemäße Verfahren in kostengünstiger Weise zu realisieren.

Bei einer bevorzugten Ausführungsform des erfindungsgemäßen Verfahrens ist vorgesehen, dass der ermittelte Winkel einen vorbestimmten Schwellenwert von weitgehend Null Grad überschreitet, insbesondere ein Schwellenwert größer als 1 bis 10 Grad, vorzugsweise 1 bis 5 Grad.

Entsprechend einer bevorzugten Weiterbildung des erfindungsgemäßen Verfahrens ist vorgesehen, dass der Schwellenwert, der größer als Null Grad ist, mit geringer werdender Entfernung des Identifikationsgebers vom Fahrzeug vergrößert wird, wobei die Entfernung vorzugsweise über eine Laufzeitmessung zwischen den Signalen, die zwischen Fahrzeug und Identifikationsgeber ausgetauscht werden, bestimmt wird.

Bei einer bevorzugten Ausführungsform des erfindungsgemäßen Verfahrens ist vorgesehen, dass die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch diese vorstehenden optionalen Maßnahmen kann das erfindungsgemäße Verfahren noch sicherer gestaltet werden.

Die Erfindung ermöglicht in vorteilhafter Weise die Bereitstellung eines Fahrzeugzugangssystems zur Autorisierung der Nutzung eines Kraftfahrzeugs, bei dem das Fahrzeugzugangssystem die Ausführung mindestens eines Schritts eines erfindungsgemäßen Verfahrens bewirkt.

Die Erfindung ermöglicht weiter die Bereitstellung eines erfindungsgemäßen Fahrzeugzugangssystems zur Autorisierung der Nutzung eines Kraftfahrzeugs, bei dem das Fahrzeugzugangssystem die Ausführung mindestens eines Schritts eines Verfahrens nach einem der vorstehenden Ansprüche ausführt oder bewirkt und der Identifikationsgeber ein Funkschlüssel oder ein Smartphone ist, vorzugsweise mit einer Identifikationsgeber-Softwareanwendung, wie eine sog. App.

Die Erfindung schlägt ferner ein erfindungsgemäßes Fahrzeugzugangssystem zur Autorisierung der Nutzung eines Kraftfahrzeugs vor, bei dem der Identifikationsgeber ein mit einem Rechnerchip versehenes Smartphone, ein mit einem Rechnerchip versehener Funk-Fahrzeugschlüssel oder eine Chipkarte mit Rechnerchip ist.

Weiter schlägt die Erfindung ein erfindungsgemäßes Fahrzeugzugangssystem zur Autorisierung der Nutzung eines Kraftfahrzeugs vor, bei dem der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

Die Erfindung schlägt eine Wegfahrsperre zur Autorisierung der Nutzung eines Kraftfahrzeugs vor, die die Ausführung mindestens eines Schritts eines erfindungsgemäßen Verfahrens bewirkt.

Ebenso schlägt die Erfindung ein Kraftfahrzeug vor, das die Ausführung mindestens eines Schritts eines erfindungsgemäßen Verfahrens bewirkt bzw. an der Ausführung beteiligt ist.

Schließlich wird ein Computerprogrammprodukt zur Steuerung mindestens eines Prozessors, der den Ablauf mindestens eines Schritts eines erfindungsgemäßen Verfahrens bewirkt, vorgeschlagen.

## Patentansprüche

1. Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Fahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals, vorzugsweise unter Verwendung eines winkelauflösendenMagnetfeldsensors,
- die zweite Fahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, insbesondere unter Verwendung des winkelauflösenden Magnetfeldsensors,
- ein erster Rechner, insbesondere ein Rechner im Identifikationsgeber, ermittelt den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals und
- der Identifikationsgeber sendet nur dann ein erstes Autorisierungssignal zur Autorisierung der Nutzung des Kraftfahrzeugs an das Kraftfahrzeug, wenn der ermittelte Winkel einen vorbestimmten Schwellenwert überschreitet,
**dadurch gekennzeichnet, dass**
- der Identifikationsgeber mit einem Bewegungssensor versehen ist bzw. wird, der Bewegungssensor ermittelt, ob er bzw. ob der Identifikationsgeber bewegt wird und der Identifikationsgeber nur dann das erste und/oder ein zweites Autorisierungssignal zur Autorisierung der Nutzung des Kraftfahrzeugs an das Kraftfahrzeug sendet, wenn der Bewegungssensor eine Bewegung des Identifikationsgebers ermittelt.

2. Verfahren zur Autorisierung der Nutzung eines Kraftfahrzeugs nach einem der vorstehenden Ansprüche, **dadurch gekennzeichnet, dass** der Bewegungssensor wiederholt ermittelt, ob er bewegt wird und der Bewegungssensor jeweils bei einer erkannten bzw. ermittelten Bewegung das Auftreten der Bewegung und/oder die Art der Bewegung mit einem Zeitstempel versieht.

3. Verfahren zur Autorisierung der Nutzung eines Kraftfahrzeugs nach einem der vorstehenden Ansprüche, **dadurch gekennzeichnet, dass** jeweils das mit einem Zeitstempel versehene Auftreten der Bewegung und/oder die mit einem Zeitstempel versehene jeweilige Art der Bewegung in einem Datenspeicher im Identifikationsgeber und/oder in einem Datenspeicher in dem Kraftfahrzeug gespeichert und für einen späteren Bewegungs-Muster-Vergleich mit einem Referenz-Bewegungsmuster bereitgehalten wird.

4. Verfahren zur Autorisierung der Nutzung eines Kraftfahrzeugs nach einem der vorstehenden Ansprüche, **dadurch gekennzeichnet, dass** der Bewegungs-Muster-Vergleich von einem Rechner im Identifikationsgeber und/oder von einem Rechner im Kraftfahrzeug durchgeführt wird und der Identifikationsgeber und/oder das Kraftfahrzeug nur dann ein Autorisierungssignal zur Autorisierung der Nutzung des Kraftfahrzeugs bereitstellt, wenn der Rechner im Identifikationsgeber und/oder der Rechner im Kraftfahrzeug einen vorbestimmten Grad an Übereinstimmung des Bewegungsmusters des Identifikationsgebers mit dem Referenz-Bewegungsmuster ermittelt.

5. Verfahren zur Autorisierung der Nutzung eines Kraftfahrzeugs nach einem der vorstehenden Ansprüche, **dadurch gekennzeichnet, dass** der Identifikationsgeber nur dann Daten, wie ein Autorisierungssignal, aussendet, wenn er aktuell bewegt wird.

6. Verfahren zur Autorisierung der Nutzung eines Kraftfahrzeugs nach einem der vorstehenden Ansprüche, **dadurch gekennzeichnet, dass** das Referenz-Bewegungs-Muster das Bewegungsmuster einer typischen Annäherung an das Fahrzeug ist.

7. Verfahren zur Autorisierung der Nutzung eines Kraftfahrzeugs nach einem der vorstehenden Ansprüche, **dadurch gekennzeichnet, dass** das Referenz-Bewegungsmuster wird für jeden Berechtigten und/oder für jeden Identifikationsgeber erhoben und für einen späteren Bewegungs-Muster-Vergleich im Identifikationsgeber und/oder im zugeordneten Kraftfahrzeug gespeichert wird.

8. Verfahren zur Autorisierung der Nutzung eines Kraftfahrzeugs nach einem der vorstehenden Ansprüche, **dadurch gekennzeichnet, dass** der Bewegungssensor durch einen Beschleunigungssensor gebildet wird.

9. Verfahren zur Autorisierung der Nutzung eines Kraftfahrzeugs nach einem der vorstehenden Ansprüche, **dadurch gekennzeichnet, dass** der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

10. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

11. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

12. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügigverändert.

13. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

14. Verfahren zur Autorisierung der Nutzung eines Kraftfahrzeugs nach einem der vorstehenden Ansprüche, **dadurch gekennzeichnet, dass** mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

15. Verfahren zur Autorisierung der Nutzung eines Kraftfahrzeugs nach einem der vorstehenden Ansprüche, **dadurch gekennzeichnet, dass** mithilfe des Skalarprodukts rechnerisch der Winkel zwischen den beiden Vektoren bestimmt wird.

16. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 10 Grad, insbesondere 1 bis 5 Grad.

17. Verfahren zur Autorisierung der Nutzung eines Kraftfahrzeugs nach einem der vorstehenden Ansprüche, **dadurch gekennzeichnet, dass** der Schwellenwert, der größer als Null Grad ist, mit geringer werdender Entfernung des Identifikationsgebers vom Fahrzeug vergrößert wird, wobei die Entfernung insbesondere über eine Laufzeitmessung zwischen den Signalen, die zwischen Fahrzeug und Identifikationsgeber ausgetauscht werden, bestimmt wird.

18. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, insbesondere zeitlich versetzt, senden.

19. Fahrzeugzugangssystem, zur Autorisierung der Nutzung eines Kraftfahrzeugs, mit einer ersten und einer zweiten Antenne, einem ersten Rechner und einem Identifikationsgeber, der mit einem Bewegungssensor versehen ist, in dem das Fahrzeugzugangssystem geeignet ist, ein Verfahren nach einem der Ansprüche 1-18 auszuführen.

20. Fahrzeugzugangssystem zur Autorisierung der Nutzung eines Kraftfahrzeugs nach Anspruch 19, **dadurch gekennzeichnet, dass** das Fahrzeugzugangssystem die Ausführung eines Verfahrens nach einem der Ansprüche 1 bis 18 ausführt oder bewirkt und der Identifikationsgeber ein Funkschlüssel oder ein Smartphone, insbesondere mit einer Identifikationsgeber-Softwareanwendung, wie eine sog. App, ist.

21. Fahrzeugzugangssystem zur Autorisierung der Nutzung eines Kraftfahrzeugs nach Anspruch 20, **dadurch gekennzeichnet, dass** der Identifikationsgeber ein mit einem Rechnerchip versehenes Smartphone, ein mit einem Rechnerchip versehener Funk-Fahrzeugschlüssel oder eine Chipkarte mit Rechnerchip ist.

22. Fahrzeugzugangssystem zur Autorisierung der Nutzung eines Kraftfahrzeugs nach Anspruch 20 oder 21, **dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

23. Wegfahrsperre, zur Autorisierung der Nutzung eines Kraftfahrzeugs, mit einer ersten und einer zweiten Antenne, einem ersten Rechner und einem Identifikationsgeber, der mit einem Bewegungssensor versehen ist, in dem die Wegfahrsperre geeignet ist, ein Verfahren nach einem der Ansprüche 1-18 auszuführen. Ansprüche 1 bis 18.

24. Computerprogrammprodukt zur Autorisierung der Nutzung eines Kraftfahrzeuges, umfassend Befehle, die bewirken, dass das Fahrzeugzugangssystem des Anspruchs 19 die Verfahrensschritte nach einem der Ansprüche 1-18 ausführt.

## Claims

1. Method for authorizing the use of a motor vehicle, in particular a two-wheeled or four-wheeled motor vehicle, which has at least a first and a second antenna, wherein the first antenna and the second antenna are spatially remote from one another, by way of a portable identification transmitter that has an identification transmitter antenna, having the following steps:
- the first vehicle antenna emits a first signal that is received by the identification transmitter antenna,
- the identification transmitter establishes at least one of the spatial components of the first electromagnetic field of the received first signal, preferably using an angle-resolving magnetic field sensor,
- the second vehicle antenna emits a second signal that is received by the identification transmitter antenna,
- the identification transmitter establishes at least one of the spatial components of the second electromagnetic field of the received second signal, in particular using the angle-resolving magnetic field sensor,
- a first computer, in particular a computer in the identification transmitter, establishes the angle at least between the established spatial component of the first electromagnetic field of the received first signal and the established spatial component of the second electromagnetic field of the received second signal, and
- the identification transmitter transmits a first authorization signal for authorizing the use of the motor vehicle to the motor vehicle only when the established angle exceeds a predetermined threshold value,
**characterized in that**
- the identification transmitter is or becomes provided with a motion sensor, the motion sensor establishes whether it or whether the identification transmitter is being moved, and the identification transmitter transmits the first and/or a second authorization signal for authorizing the use of the motor vehicle to the motor vehicle only when the motion sensor establishes a movement of the identification transmitter.

2. Method for authorizing the use of a motor vehicle according to one of the preceding claims, **characterized in that** the motion sensor repeatedly establishes whether it is being moved and, when a movement is recognized or established, the motion sensor in each case provides the occurrence of the movement and/or the type of the movement with a timestamp.

3. Method for authorizing the use of a motor vehicle according to either of the preceding claims, **characterized in that** in each case the occurrence of the movement provided with a timestamp and/or the respective type of the movement provided with a timestamp are stored in a data store in the identification transmitter and/or in a data store in the motor vehicle and retained for a subsequent movement pattern comparison with a reference movement pattern.

4. Method for authorizing the use of a motor vehicle according to one of the preceding claims, **characterized in that** the movement pattern comparison is performed by a computer in the identification transmitter and/or by a computer in the motor vehicle, and the identification transmitter and/or the motor vehicle provides an authorization signal for authorizing the use of the motor vehicle only when the computer in the identification transmitter and/or the computer in the motor vehicle establishes a predetermined match level between the movement pattern of the identification transmitter and the reference movement pattern.

5. Method for authorizing the use of a motor vehicle according to one of the preceding claims, **characterized in that** the identification transmitter emits data, such as an authorization signal, only when it is currently being moved.

6. Method for authorizing the use of a motor vehicle according to one of the preceding claims, **characterized in that** the reference movement pattern is the movement pattern of a typical approach to the vehicle.

7. Method for authorizing the use of a motor vehicle according to one of the preceding claims, **characterized in that** the reference movement pattern is collected for each authorized party and/or for each identification transmitter and stored in the identification transmitter and/or in the associated motor vehicle for a subsequent movement pattern comparison.

8. Method for authorizing the use of a motor vehicle according to one of the preceding claims, **characterized in that** the motion sensor is formed by an acceleration sensor.

9. Method for authorizing the use of a motor vehicle according to one of the preceding claims, **characterized in that** the time difference between the emission of the first signal by the first vehicle antenna and the emission of the second signal by the second vehicle antenna is selected to be so short in time - but other than zero - that the identification transmitter carried by the driver is substantially not moved as the driver approaches the vehicle, and therefore the establishment of the angle at least between the established spatial component of the first electromagnetic field of the received first signal and the established spatial component of the second electromagnetic field of the received second signal is substantially not falsified or not unusable as a result of the movement of the driver or as a result of the movement, connected therewith, of the identification transmitter.

10. Method for authorizing the use of a motor vehicle according to one of the preceding claims, **characterized in that** the motor vehicle has a further third antenna that is spatially remote from the first and the second antenna, respectively, and **in that**, in the same way, the angle at least between the established spatial component of the first electromagnetic field of the received first signal and the established spatial component of the third electromagnetic field of a third signal emitted by the third antenna and received by the identification transmitter is determined.

11. Method for authorizing the use of a motor vehicle according to one of the preceding claims, **characterized in that** the spatial components, established by the identification transmitter, of the first electromagnetic field of the received first signal are the x, y and z components of the electromagnetic field of a first Cartesian coordinate system.

12. Method for authorizing the use of a motor vehicle according to one of the preceding claims, **characterized in that** the spatial components, established by the identification transmitter, of the second electromagnetic field of the received second signal, the x, y and z components of the electromagnetic field are substantially the components with reference to the first Cartesian coordinate system, substantially because the Cartesian coordinate system or reference system underlying the establishment of the components changes spatially only slightly upon slight movements of the identification transmitter in very short time periods between the repeated establishment of the angles.

13. Method for authorizing the use of a motor vehicle according to one of the preceding claims, **characterized in that** the spatial components, established by the identification transmitter, of the third electromagnetic field of the received third signal, the x, y and z components of the electromagnetic field are substantially those of the first Cartesian coordinate system.

14. Method for authorizing the use of a motor vehicle according to one of the preceding claims, **characterized in that** at least one first vector is formed computationally from the x, y and z components, established by the identification transmitter, of the first electromagnetic field of the received first signal and one second vector is formed computationally from the x, y and z components, established by the identification transmitter, of the second electromagnetic field of the received second signal, and their scalar product is formed computationally from these two vectors.

15. Method for authorizing the use of a motor vehicle according to one of the preceding claims, **characterized in that** the angle between the two vectors is determined computationally with the aid of the scalar product.

16. Method for authorizing the use of a motor vehicle according to one of the preceding claims, **characterized in that** the established angle exceeds a predetermined threshold value of substantially zero degrees, in particular a threshold value greater than 1 to 10 degrees, in particular 1 to 5 degrees.

17. Method for authorizing the use of a motor vehicle according to one of the preceding claims, **characterized in that** the threshold value, which is greater than zero degrees, is increased as the distance of the identification transmitter from the vehicle decreases, wherein the distance is in particular determined via a propagation time measurement between the signals that are exchanged between vehicle and identification transmitter.

18. Method for authorizing the use of a motor vehicle according to one of the preceding claims, **characterized in that** the first, second and third antenna each transmit on an identical or different frequency in the frequency range of 20 kHz to 140 kHz, in particular on about 125 kHz, in particular in a temporally offset manner.

19. Vehicle access system for authorizing the use of a motor vehicle, having a first and a second antenna, a first computer and an identification transmitter that is provided with a motion sensor, wherein the vehicle access system is suitable for executing a method according to one of Claims 1 to 18.

20. Vehicle access system for authorizing the use of a motor vehicle according to Claim 19, **characterized in that** the vehicle access system executes or brings about the execution of a method according to one of Claims 1 to 18 and the identification transmitter is a radio key or a smartphone, in particular having an identification transmitter software application, such as what is known as an app.

21. Vehicle access system for authorizing the use of a motor vehicle according to Claim 20, **characterized in that** the identification transmitter is a smartphone provided with a computer chip, a radio vehicle key provided with a computer chip or a chip card having a computer chip.

22. Vehicle access system for authorizing the use of a motor vehicle according to Claim 20 or 21, **characterized in that** the identification transmitter has a sensor for determining or establishing an electromagnetic field and/or the components of the electromagnetic field that has been produced by one or more vehicle antennae in the region of the identification transmitter.

23. Immobilizer for authorizing the use of a motor vehicle, having a first and a second antenna, a first computer and an identification transmitter that is provided with a motion sensor, wherein the immobilizer is suitable for executing a method according to one of Claims 1-18. Claims 1 to 18.

24. Computer program product for authorizing the use of a motor vehicle, comprising commands that have the effect that the vehicle access system from Claim 19 executes the method steps according to one of Claims 1-18.

## Revendications

1. Procédé d'autorisation de l'utilisation d'un véhicule automobile, en particulier d'un véhicule automobile à deux ou quatre roues, qui présente au moins une première et une deuxième antenne, la première antenne et la deuxième antenne étant espacées spatialement l'une de l'autre, au moyen d'un transmetteur d'identification portable qui présente une antenne de transmetteur d'identification, comprenant les étapes suivantes :
- la première antenne de véhicule émet un premier signal qui est reçu par l'antenne de transmetteur d'identification,
- le transmetteur d'identification établit au moins l'une des composantes spatiales du premier champ électromagnétique du premier signal reçu, de préférence en utilisant un capteur de champ magnétique à résolution angulaire,
- la deuxième antenne de véhicule automobile émet un deuxième signal qui est reçu par l'antenne de transmetteur d'identification,
- le transmetteur d'identification établit au moins l'une des composantes spatiales du deuxième champ électromagnétique du deuxième signal reçu, en particulier en utilisant un capteur de champ magnétique à résolution angulaire,
un premier calculateur, en particulier un calculateur dans le transmetteur d'identification, établit l'angle au moins entre la composante spatiale établie du premier champ électromagnétique du premier signal reçu et la composante spatiale établie du deuxième champ électromagnétique du deuxième signal reçu, et
- le transmetteur d'identification n'envoie au véhicule automobile un premier signal d'autorisation pour autoriser l'utilisation du véhicule automobile que si l'angle établi dépasse une valeur seuil prédéterminée,
**caractérisé en ce que**
- le transmetteur d'identification est ou sera muni d'un capteur de déplacement, le capteur de déplacement établit si lui ou le transmetteur d'identification est déplacé, et le transmetteur d'identification n'envoie au véhicule automobile le premier et/ou un deuxième signal d'autorisation pour autoriser l'utilisation du véhicule automobile que si le capteur de déplacement établit un déplacement du transmetteur d'identification.

2. Procédé d'autorisation de l'utilisation d'un véhicule automobile selon l'une quelconque des revendications précédentes, **caractérisé en ce que** le capteur de déplacement établit de manière répétée s'il est déplacé, et le capteur de déplacement applique un horodatage à l'apparition du déplacement et/ou au type du déplacement lors d'un déplacement identifié ou établi respectivement.

3. Procédé d'autorisation de l'utilisation d'un véhicule automobile selon l'une quelconque des revendications précédentes, **caractérisé en ce que** respectivement l'apparition horodatée du déplacement et/ou le type respectif horodaté du déplacement sont stockés dans une mémoire de données dans le transmetteur d'identification et/ou dans une mémoire de données dans le véhicule automobile, et sont rendus disponibles pour une comparaison ultérieure de schéma de déplacement avec un schéma de déplacement de référence.

4. Procédé d'autorisation de l'utilisation d'un véhicule automobile selon l'une quelconque des revendications précédentes, **caractérisé en ce que** la comparaison de schéma de déplacement est effectuée par un calculateur dans le transmetteur d'identification et/ou par un calculateur dans le véhicule automobile, et le transmetteur d'identification et/ou le véhicule automobile ne fournissent un signal d'autorisation autorisant l'utilisation du véhicule automobile que si le calculateur dans le transmetteur d'identification et/ou le calculateur dans le véhicule automobile établissent un degré prédéterminé de concordance entre le schéma de déplacement du transmetteur d'identification et le schéma de déplacement de référence.

5. Procédé d'autorisation de l'utilisation d'un véhicule automobile selon l'une quelconque des revendications précédentes, **caractérisé en ce que** le transmetteur d'identification n'émet des données, telles qu'un signal d'autorisation, que s'il est actuellement en cours de déplacement.

6. Procédé d'autorisation de l'utilisation d'un véhicule automobile selon l'une quelconque des revendications précédentes, **caractérisé en ce que** le schéma de déplacement de référence est le schéma de déplacement d'une approche typique du véhicule.

7. Procédé d'autorisation de l'utilisation d'un véhicule automobile selon l'une quelconque des revendications précédentes, **caractérisé en ce que** le schéma de déplacement de référence est relevé pour chaque personne autorisée et/ou pour chaque transmetteur d'identification, et est stocké pour une comparaison ultérieure de schéma de déplacement dans le transmetteur d'identification et/ou dans le véhicule automobile associé.

8. Procédé d'autorisation de l'utilisation d'un véhicule automobile selon l'une quelconque des revendications précédentes, **caractérisé en ce que** le capteur de déplacement est formé par un capteur d'accélération.

9. Procédé d'autorisation de l'utilisation d'un véhicule automobile selon l'une quelconque des revendications précédentes, **caractérisé en ce que** l'intervalle de temps entre l'émission du premier signal par la première antenne de véhicule et l'émission du deuxième signal par la deuxième antenne de véhicule est sélectionné pour être si bref, mais différent de zéro, que le transmetteur d'identification emporté par le conducteur n'est substantiellement pas déplacé lorsque le conducteur s'approche du véhicule, et donc l'établissement de l'angle, au moins entre la composante spatiale établie du premier champ électromagnétique du premier signal reçu et la composante spatiale établie du deuxième champ électromagnétique du deuxième signal reçu, n'est substantiellement pas faussé ou rendu inutilisable par le déplacement du conducteur ou le déplacement associé du transmetteur d'identification.

10. Procédé d'autorisation de l'utilisation d'un véhicule automobile selon l'une quelconque des revendications précédentes, **caractérisé en ce que** le véhicule automobile présente une troisième antenne supplémentaire qui est espacée spatialement de la première et de la deuxième antenne respectivement, et **en ce que** de manière analogue, l'angle au moins entre la composante spatiale établie du premier champ électromagnétique du premier signal reçu et la composante spatiale établie du troisième champ électromagnétique d'un troisième signal émis par la troisième antenne et reçu par le transmetteur d'identification est déterminé.

11. Procédé d'autorisation de l'utilisation d'un véhicule automobile selon l'une quelconque des revendications précédentes, **caractérisé en ce que** les composantes spatiales du premier champ électromagnétique du premier signal reçu, établies par le transmetteur d'identification, sont les composantes x, y et z du champ électromagnétique d'un premier système de coordonnées cartésiennes.

12. Procédé d'autorisation de l'utilisation d'un véhicule automobile selon l'une quelconque des revendications précédentes, **caractérisé en ce que** les composantes spatiales du deuxième champ électromagnétique du deuxième signal reçu, établies par le transmetteur d'identification, les composantes x, y et z du champ électromagnétique sont substantiellement les composantes par rapport au premier système de coordonnées cartésiennes, substantiellement parce que le système de coordonnées cartésiennes ou le système de référence à la base de l'établissement des composantes ne varie spatialement que très peu pour de légers déplacements du transmetteur d'identification pendant des périodes très courtes entre l'établissement répété des angles.

13. Procédé d'autorisation de l'utilisation d'un véhicule automobile selon l'une quelconque des revendications précédentes, **caractérisé en ce que** les composantes spatiales du troisième champ électromagnétique du troisième signal reçu, établies par le transmetteur d'identification, les composantes x, y et z du champ électromagnétique sont substantiellement celles du premier système de coordonnées cartésiennes.

14. Procédé d'autorisation de l'utilisation d'un véhicule automobile selon l'une quelconque des revendications précédentes, **caractérisé en ce qu'**au moins un premier vecteur est formé arithmétiquement à partir des composantes x, y et z du premier champ électromagnétique du premier signal reçu, établies par le transmetteur d'identification, et un deuxième vecteur est formé arithmétiquement à partir des composantes x, y et z du deuxième champ électromagnétique du deuxième signal reçu, établies par le transmetteur d'identification, et un produit scalaire est formé arithmétiquement à partir de ces deux vecteurs.

15. Procédé d'autorisation de l'utilisation d'un véhicule automobile selon l'une quelconque des revendications précédentes, **caractérisé en ce que** l'angle entre les deux vecteurs est déterminé arithmétiquement à l'aide du produit scalaire.

16. Procédé d'autorisation de l'utilisation d'un véhicule automobile selon l'une quelconque des revendications précédentes, **caractérisé en ce que** l'angle établi dépasse une valeur seuil prédéterminée de substantiellement zéro degré, en particulier une valeur seuil supérieure à 1 à 10 degrés, en particulier à 1 à 5 degrés.

17. Procédé d'autorisation de l'utilisation d'un véhicule automobile selon l'une quelconque des revendications précédentes, **caractérisé en ce que** la valeur seuil, qui est supérieure à zéro degré, augmente lorsque la distance du transmetteur d'identification au véhicule automobile diminue, la distance étant déterminée en particulier par une mesure de temps de propagation entre les signaux qui sont échangés entre le véhicule automobile et le transmetteur d'identification.

18. Procédé d'autorisation de l'utilisation d'un véhicule automobile selon l'une quelconque des revendications précédentes, **caractérisé en ce que** la première, la deuxième et la troisième antenne émettent respectivement sur une même fréquence ou sur des fréquences différentes dans la plage de fréquences de 20 kHz à 140 kHz, en particulier à environ 125 kHz, en particulier de manière décalée dans le temps.

19. Système d'accès à un véhicule pour autoriser l'utilisation d'un véhicule automobile, comprenant une première et une deuxième antenne, un premier calculateur et un transmetteur d'identification muni d'un capteur de déplacement, le système d'accès à un véhicule étant adapté pour exécuter un procédé selon l'une quelconque des revendications 1 à 18.

20. Système d'accès à un véhicule pour autoriser l'utilisation d'un véhicule automobile selon la revendication 19, **caractérisé en ce que** le système d'accès à un véhicule effectue ou provoque l'exécution d'un procédé selon l'une quelconque des revendications 1 à 18, et le transmetteur d'identification est une clé à télécommande ou un smartphone, en particulier avec une application logicielle de transmetteur d'identification, telle qu'une appli.

21. Système d'accès à un véhicule pour autoriser l'utilisation d'un véhicule automobile selon la revendication 20, **caractérisé en ce que** le transmetteur d'identification est un smartphone équipé d'une puce informatique, une clé de véhicule à télécommande équipée d'une puce informatique ou une carte à puce avec une puce informatique.

22. Système d'accès à un véhicule pour autoriser l'utilisation d'un véhicule automobile selon la revendication 20 ou 21, **caractérisé en ce que** le transmetteur d'identification présente un capteur pour déterminer ou établir un champ électromagnétique et/ou les composantes du champ électromagnétique qui a été généré par une ou plusieurs antennes de véhicule au niveau du transmetteur d'identification.

23. Dispositif antidémarrage pour autoriser l'utilisation d'un véhicule automobile, comprenant une première et une deuxième antenne, un premier calculateur et un transmetteur d'identification qui est muni d'un capteur de déplacement, le dispositif antidémarrage étant adapté pour exécuter un procédé selon l'une quelconque des revendications 1 à 18. Revendications 1 à 18.

24. Produit de programme informatique pour autoriser l'utilisation d'un véhicule automobile, comprenant des instructions qui font que le système d'accès à un véhicule selon la revendication 19 exécute les étapes de procédé selon l'une quelconque des revendications 1 à 18.
